# EUROPEAN PATENT APPLICATION

(11) **EP 2 605 500 A1**
(43) Date of publication of application: **19.06.2013**
(21) Application number: 12181306.7
(22) Date of filing: 22.08.2012
(51) Int. Cl.: H04M 3/56

(54) **Visual feedback of audio input levels**

(30) Priority: 14.12.2011 US 201113374153
(71) Applicant: Mitel Networks Corporation, Ottawa, ON K2K 2W7 (CA)
(72) Inventor: Schulz, Dieter, Dunrobin, Ontario K0A 1T0 (CA)
(74) Representative: Derry, Paul Stefan

(57) **Abstract**

The present disclosure relates to a conferencing appliance (100). More specifically, this disclosure relates to visual feedback of audio input levels. In one illustrative embodiment, a ring-shaped indicator (102) can be provided on a conferencing appliance. When an audio stream is received, the audio stream can be filtered by removing echoes and background noises. The appliance can determine the power level of the audio stream. The appliance can then activate the ring-shaped indicator showing the calculated power level (202) of the audio stream and the direction of the speaker (104B). Different colors can be used showing the power level of the audio stream. Light intensity can also be used to indicate the power level of the incoming audio. The indicator can be placed on a standard telephone.

## Description

This disclosure generally relates to collaborative meetings, and more particularly, to a conference room solution that facilitates meetings through the display of audio input levels from users situated around a collaboration appliance.

In businesses, conference room solutions are a must particularly when a large number of participants are attending. Typical settings can allow a number of participants situated throughout a room to attend the conference. Participants can be located far from the conference appliance. Participants who are speaking can be asked to either talk louder or repeat themselves so that others can hear the conversation. Others can speak softly posing additional issues within the conference.

In outgoing communications, collaboration appliances can provide an automatic gain control (AGC) to adjust the volume to an appropriate level for a range of input signal levels. For example, the participant who is located further away from the appliance can have their audio stream increased to a stronger signal to compensate for their distance. The soft spoken participant can also have their audio signal increased. For audio that is too strong, the audio can be weakened by the AGC. Nevertheless, AGCs introduce varying noise levels that can be annoying to the participants. Manual prompting can interrupt the conference call dynamics and impacts understanding.

A need exists for visual feedback of audio input levels that overcome those issues described above. These, as well as other related advantages, will be described in the present disclosure.

The novel features believed to be characteristic of the disclosure are set forth in the appended claims. In the descriptions that follow, like parts are marked throughout the specification and drawings with the same numerals, respectively. The drawing FIGURES are not necessarily drawn to scale and certain FIGURES can be shown in exaggerated or generalized form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
FIGURE 1 is a top perspective view of an illustrative collaboration appliance for providing visual feedback of audio input levels in accordance with one or more aspects of the present disclosure;
FIGURE 2 is a top view of the illustrative collaboration appliance in accordance with one or more aspects of the present disclosure;
FIGURE 3 is a block diagram providing exemplary components of the illustrative collaboration appliance in accordance with one or more aspects of the present disclosure; and
FIGURE 4 is a flow chart providing exemplary processes for activating an indicator on the collaboration appliance in accordance with one or more aspects of the present disclosure.

The description set forth below in connection with the appended drawings is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the scope of this disclosure.

The present disclosure relates to a conferencing appliance. More specifically, this disclosure relates to visual feedback of audio input levels. In some illustrative embodiments, a ring-shaped indicator can be provided on a conferencing appliance. When an audio stream is received, the audio stream can be filtered by removing echoes and background noises. The appliance can determine the power level of the audio stream. The appliance can then activate the ring-shaped indicator showing the calculated power level of the audio stream. Colors can be used to show the calculated power level. Light intensity can also be used to indicate the power level of the incoming audio.

A number of advantages can be offered by the illustrative embodiments described above. Voice levels for participants surrounding the collaboration appliance can be monitored and displayed through the ring-shaped indicator. For example, the indicator on the appliance can change colors when the participant is speaking loud or too soft. The direction from which the audio signal is received can be shown through the indicator allowing the participant who is creating the signal to know that it is them who is speaking. Many additional advantages of the present disclosure will become apparent to those skilled in the relevant art as provided for in the following description.

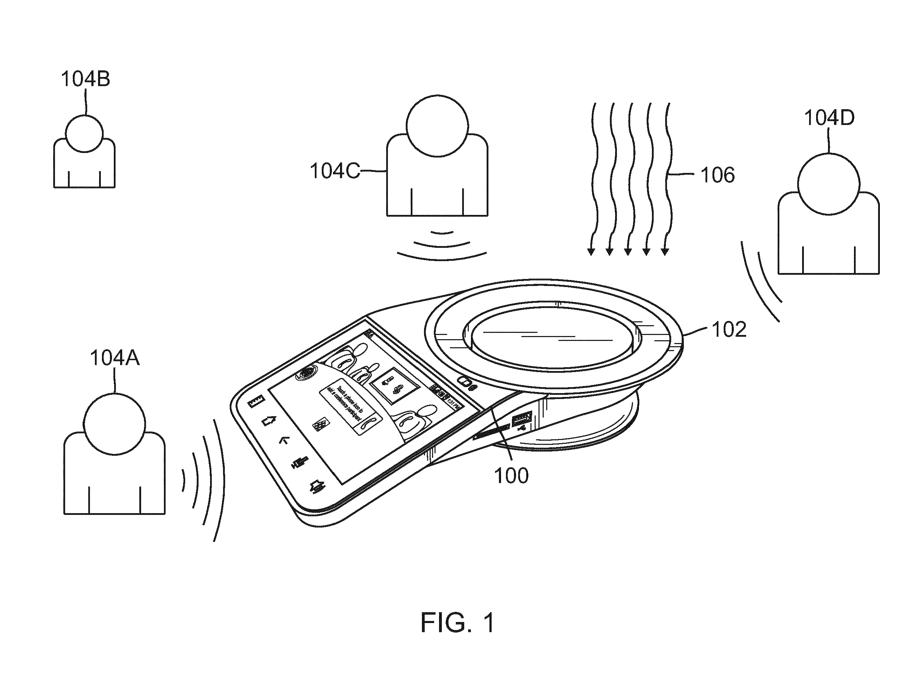

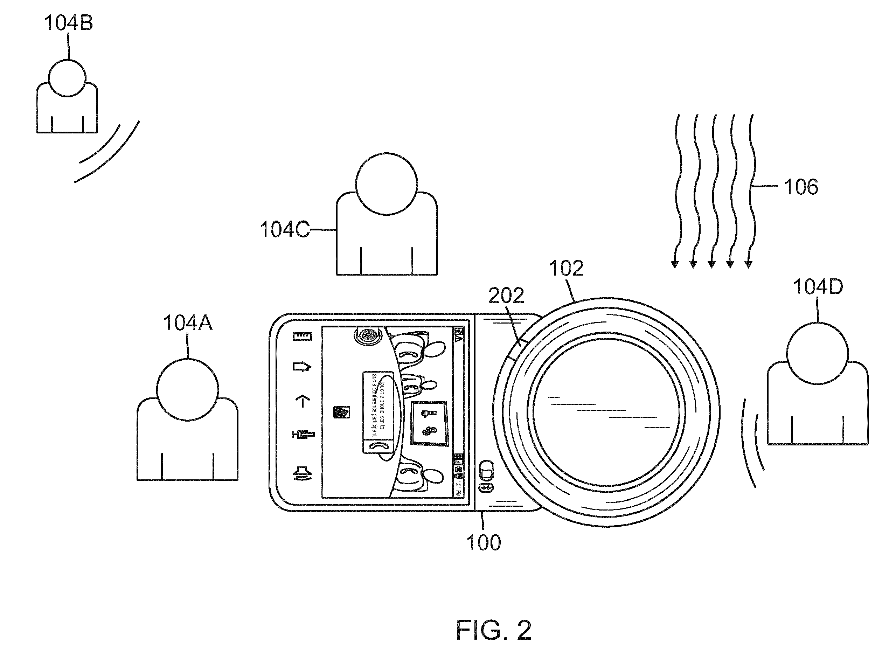

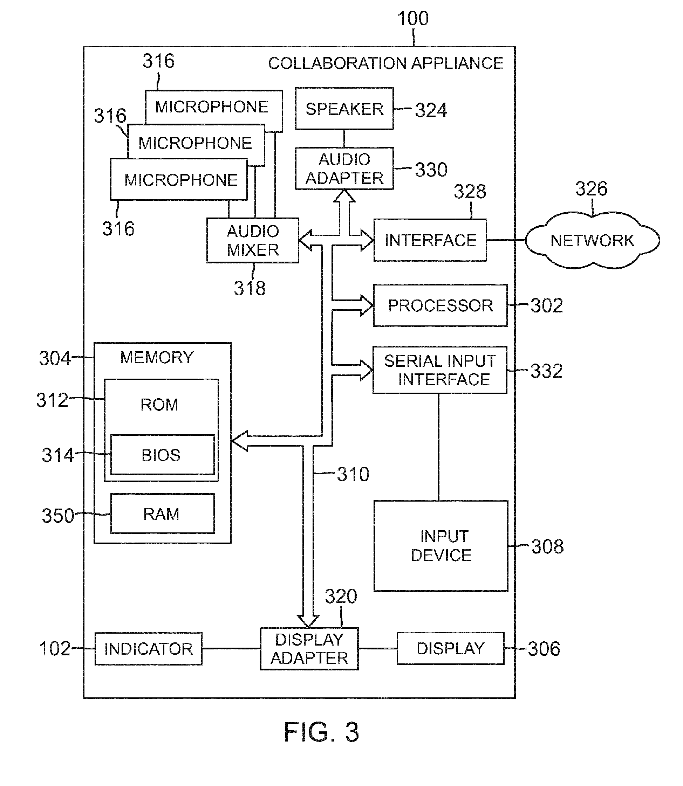

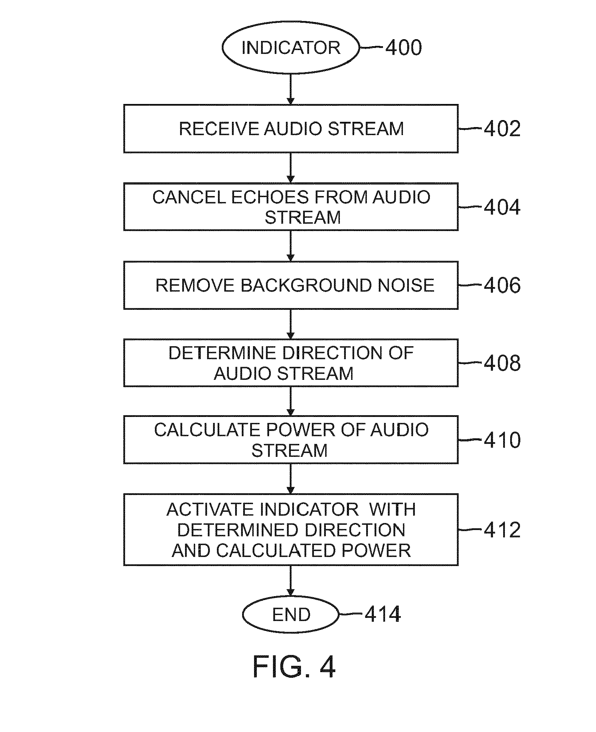

Before describing embodiments of the present disclosure, an exemplary environment in which the collaboration appliance can be placed will be described in FIGURE 1 with a top view provided in FIGURE 2. Hardware and software of the appliance is shown in FIGURE 3. Thereafter, FIGURE 4 will provide exemplary processes for providing visual feedback of audio input levels. The different embodiments described herein are provided for illustrative purposes and should not be construed as the only aspects of the present disclosure.

Referring now to FIGURE 1, a top perspective view of an illustrative collaboration appliance 100 for providing visual feedback of audio input levels in accordance with one or more aspects of the present disclosure is shown. The appliance 100 can be surrounded by participant 104A, participant 104B, participant 104C and participant 104D (collectively participants 104). The participants 104 can be located close to or away from the appliance 100. A number of factors can contribute to the level of power of an audio signal received by the collaboration appliance 100. Dependent on their location, the power level can be lower when further away, for example, where participant 104B is located. Oppositely, participant 104A can provide an audio signal having a power level that is greater as they are closer to the appliance 100. Participants 104 can also speak softly or with a higher voice.

Outside disturbances 106 can be detected by the collaboration appliance 100. When sound reflects off surfaces, the reflected sound can arrive at the appliance 100 some time after the direct sound. This echoing can produce a disturbance 106 to the audio signal received by the appliance 100. Background noise can also produce disturbances 106 to audio signals. Examples of background noises can be environmental noises such as traffic, alarms, background conversations, air conditioners and power supplies.

Varying levels of sounds can be provided to the collaboration appliance 100 from many directions. The appliance 100 can provide an indicator 102 showing a power level and direction from where an audio stream is received. FIGURE 2 is a top view of the illustrative collaboration appliance 100 in accordance with one or more aspects of the present disclosure. The indicator 102 can come in a variety of forms and shapes and is not limited to the circular arrangement shown herein. The indicator can be part of the appliance 100, but can also be provided on a number of different communication devices such as phones, tablets, desktop and laptop computers, etc.

The indicator 102 can have a ring shape. A plurality of segments 202 can be distributed around the circumference of the indicator 102. A light emitting diode (LED) can be fitted within each segment 202, or in the alternative, a single LED can be used for the entire indicator 102. LEDs having a single color or multi-colored LEDs can be placed within the indicator 102. Varying levels of light intensity can be provided by the LEDs. The indicator 102 with LEDs can be referred to as a light source or LED ring within the present disclosure. The segments 202 of the indicator 102 can point in a direction of where the audio signal is coming from. For example, a single segment 202 can be activated to indicate the direction of the received audio signal. Those skilled in the relevant art will appreciate that other indicia on the indicator 102 can be used, for example, arrows. As shown in FIGURE 2, the segment 202 can be lighted and point in the direction of where the audio is received from, that is, participant 104B.

The indicator 102 can also activate the segment 202 to a power level of the incoming audio signal received from participant 104B. Various colors produced from the LEDs can indicate whether the participant 104B is speaking softly or loud. The segment 202 can display a green light when the participant 104B is providing the correct power level. Otherwise, a red light can indicate that the voice level is loud and a blue light can indicate that it is too soft. Those skilled in the relevant art will appreciate that a variety of colors can be used and are not limited to those described above. Varying intensities of light can also be used. For example, a lower intensity of light can indicate a softer audio signal, while a brighter light can indicate a louder audio signal.

While LEDs were used to indicate a direction and power level of the incoming audio, other mechanisms and devices can be used. Patterns can be used within the indicator 102 to distinguish voice levels and directions. Furthermore, the indicator 102 does not have to be partitioned in segments 202 such that the entire indicator 102 can light up. The indicator 102 can also take on a variety of shapes, for example, a square or octagon. The indicator 102 can be positioned at numerous locations on the collaboration appliance 100. For example, the indicator 102 can be raised above the base and have video screens on a side portion.

Voice recognition can be integrated into the collaboration appliance 100 such that the indicator 102 can display information about the participant 104 the audio is coming from. The participant 104 can pre-establish their voice within the appliance 100 or a connected device. When an audio signal is received, the appliance 100 or connected device can determine the identity and provide information on the display or indicator 102. Other pertinent information about the speaking participant 104 can be displayed such as title, office location, etc.

The indicator 102 can also be a hologram projected from the collaboration appliance 100. The hologram can display the power level and direction from where the audio came from. Other mechanisms for showing the information can be elevated monitors circling around the appliance 100. Each of the monitors can provide indicia of where the power and direction of the audio signal. While one segment 202 was shown, the indicator 102 can light multiple segments 202 resulting from a number of incoming audio streams for different participants 104. The entire indicator 102 may light up without regard to the direction of the incoming audio signal.

Turning to FIGURE 3, a block diagram providing exemplary components of the illustrative collaboration appliance 100 in accordance with one or more aspects of the present disclosure is shown. The collaboration appliance 100 can include a processor 302 for implementing logic, memory 304, a display 306 and an input device 308. A system bus 310 can be used for video and audio data as well as propagating signals for processing the video and audio.

On the display 306 of the collaboration appliance 100, a touch-screen interface is provided. The display 306 can be a color multi-touch liquid crystal display (LCD) that provides a graphical user interface (GUI) for the collaboration appliance 100. The display 306 can be connected to a display adapter 320. The display adapter 320 can receive information for display from the bus 310. The display 306 can also be used as an input device 308. The display adapter 320 can be connected to the indicator 102. The input device 308 can be connected to the system bus 310 through a serial input interface 332.

With reference now to the memory 304, the collaboration appliance 100 typically includes both volatile memory, for example RAM 350_{,} and non-volatile memory, for example ROM 312, Flash Memory, or the like. The non-volatile portion of the memory 312 can be used to store persistent information which should not be lost when the collaboration appliance 100 is powered down. Within the ROM 312, can be BIOS 314 for defining a firmware interface. Within the memory 304, the collaboration appliance 100 can include an operating system (OS) stored in the RAM 350, which can manage programs. The OS can reside in the memory 304 and be executed on the processor 302. An OS such as AndroidTM or Windows 7 Mobile® can be used. Other more traditional OSs can also be used by the collaboration appliance 100. Applications for implementing the conference call user interface can be loaded into memory 304 and run on or in association with the OS.

The collaboration appliance 100 can have an array of microphones 316 built-in as with any standard conference phone. The audio from the microphones 316 can be provided to the audio mixer 318. Through the set of microphones 316, the location where an audio signal is coming from can be determined. The sound pressure can be detected by the microphones to determine a location. The collaboration appliance 100 can also include a plurality of probes for detecting the location. These probes can measure particle velocities to determine a location of a participant 104 who is speaking. The collaboration appliance 100 can include a speaker 324. The speaker 324 can propagate incoming audio received from the local area network 326 through the interface 328. These communications can then be provided over the bus 310 to the audio adapter 330.

The data structures and code, in which the present disclosure can be implemented, can typically be stored on a non-transitory computer-readable storage medium. The storage can be any device or medium that can store code and/or data for use by a computer system. The non-transitory computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing code and/or data now known or later developed.

The technology described herein can be implemented as logical operations and/or modules. The logical operations can be implemented as a sequence of processor-implemented executed steps and as interconnected machine or circuit modules. Likewise, the descriptions of various component modules can be provided in terms of operations executed or effected by the modules. The resulting implementation is a matter of choice, dependent on the performance requirements of the underlying system implementing the described technology. Accordingly, the logical operations making up embodiments of the technology described herein are referred to variously as operations, steps, objects, or modules. It should be understood that logical operations can be performed in any order, unless explicitly claimed otherwise or a specific order is inherently necessitated by the claim language.

Referring to FIGURE 4, a flow chart providing exemplary processes for activating sections 202 on the collaboration appliance 100 in accordance with one or more aspects of the present disclosure is shown. Various embodiments of the following processes can be programmed using an object-oriented programming language, such as SmallTalk, Java, C++, Ada, or C#. Other object-oriented programming languages can also be used. Alternatively, functional, scripting, and/or logical programming languages can be used. Various aspects of this disclosure can be implemented in a non-programmed environment, for example, documents created in HTML, XML, or other format that, when viewed in a window of a browser program, render aspects of a GUI or perform other functions. Various aspects of the disclosure can be implemented as programmed or non-programmed elements, or any combination thereof.

The methods and processes described in the disclosure can be embodied as code and/or data, which can be stored in a non-transitory computer-readable storage medium as described above. When a computer system on the collaboration appliance 100 reads and executes the code and/or data stored on the non-transitory computer-readable storage medium, the computer system performs the methods and processes embodied as data structures and code and stored within the non-transitory computer-readable storage medium. Furthermore, the methods and processes described can be included in hardware modules on the collaboration appliance 100. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The processes can begin at block 400. At block 402, the collaboration appliance 100 can receive an audio stream. The audio stream can be provided by a participant 104. Other disturbances 106 can also be part of the incoming stream. At block 404, echoes from the disturbances 106 can be cancelled from the audio stream. The echoing effect can be removed by recognizing an originally transmitted signal that re-appears with some delay in the received signal. Once the echo is recognized, it can be removed by subtracting it from the received signal. Cancelling echoes can be performed by a digital signal processor.

At block 406, background noise from the disturbances 106 can be removed from the audio stream. Background noise can be sound other than the sound being monitored. Examples of background noises are environmental noises such as waves, traffic noise, alarms, people talking, mechanical noise from devices such as refrigerators or air conditioning, power supplies or motors.

The collaboration appliance 100 can determine the direction of the audio stream at block 408. The direction can be determined through acoustics. Microphones 316 within the appliance 100 can be used to determine the direction of the speaking participant 104. The microphones 316 can be positioned in a number of different patterns within the appliance 100 for detecting the direction of the incoming audio signal. Furthermore, the microphones 316 can be used for determining a distance of the participant 104 who is speaking.

In some embodiments, particle velocities can be used by the collaboration appliance 100 to detect the direction of the participant 104 who is speaking. Particle velocities can be detected through particle velocity probes placed within the collaboration appliance 100. These probes can measure acoustic particle velocity directly. By measuring particle velocity, the appliance 100 can obtain a source direction directly. There can be other methods for determining the direction of incoming audio and is not limited to those described above.

At block 410, the level of power of the audio stream can be calculated. Since the instantaneous power of an AC waveform varies over time, AC power, which includes audio power, is typically measured as an average over time. The collaboration appliance 100 can keep track of the calculated power of the incoming audio signal.

At block 412, the collaboration appliance 100 can activate the indicator 102. The appliance 100 can have an LED ring that indicates the direction of the active participant 104 who is speaking as shown in FIGURE 2. The direction of the speaker can be indicated by the lighted segment 202 described above. Arrows or other indicia pointing to the direction of the participant 104 can be used by the appliance 100.

The indicator 102 can be a multi-colored LED ring. The participant 104 who is speaking can get visual feedback of their speech level based on the calculated power of their audio stream. This volume level can be shown through different colors on the indicator 102. For example, green can indicate that the power level of audio is in the correct range. The color orange can indicate that the volume level is too soft, while red can indicate that the participant 104 is speaking too loudly. Shades of color can also be used on the indicator 102. Light intensity can also be used to indicate the power level of the audio signal.

The calculated power shown on the indicator 102 of the collaboration appliance 100 can use hysteresis and decision logic to make sure that the visual indication does not change abruptly in silent periods of speech. The lighted segment 202 can smooth out the power over time to reduce a flickering effect. The states of the echo canceller can also be fed into the decision logic so that the LED color does not change in the single talk far end phase when there is no active talker in the room or double silent phase when there is no speech on both ends.

While only one participant 104 was shown to be speaking at time, the indicator 102 can illuminate multiple segments 202 at a time. The collaboration appliance 100 can handle multiple processes or multi-threading. The processes can end at block 414. While a special collaboration appliance 100 was used having an indicator 102 for showing the direction and power level of incoming audio, concepts and features described herein can be used by other devices. For example, the message waiting LED of a standard phone can indicate the power level of incoming audio.

In some embodiments, the collaboration appliance 100 can have multiple rings. One ring can be used for audio levels and directions described above. Another ring can be incorporated within the appliance 100 for showing incoming audio from a remote source of audio. The ring can show the power level of the incoming audio from the distant source. Furthermore, while many segments 202 were shown within the indicator 102, the entire indicator 102 can be activated and not denote the particular direction the audio signal is coming from.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A device comprising:
an indicator; and
at least one processor, said processor configured to:
receive audio;
determine a level of power for said audio;
display said level of power in a direction from where said audio is received on said indicator.

2. The device of claim 1, wherein said indicator is ring-shaped.

3. The device of claim 1 or claim 2, wherein said indicator comprises a plurality of light emitting diodes.

4. The device of any of claims 1 to 3, wherein displaying said level of power on said indicator comprises presenting a light intensity dependent on said level of power for said audio.

5. The device of any of claims 1 to 4, wherein displaying said level of power on said indicator comprises presenting a plurality of patterns dependent on said level of power for said audio.

6. A method for providing visual feedback of audio input on a communication device comprising:
receiving an audio stream;
calculating a power level for said audio stream; and
activating an indicator adapted to said power level of said audio stream.

7. The method of claim 6, comprising filtering said audio stream and optionally wherein filtering said audio stream comprises removing echoes and/or removing background noise.

8. The method of claim 6 or claim 7, comprising determining a direction of said audio stream by measuring sound pressure through a plurality of microphones and activating said indicator in said direction of said audio stream.

9. The method of claim 6 or claim 7, comprising determining a direction of said audio stream by measuring particle velocities through a plurality of probes and activating said indicator in said direction of said audio stream.

10. The method of any of claims 6 to 9, wherein calculating said power level for said audio stream comprises measuring said power level over a period of time.

11. The method of any of claims 6 to 10, wherein activating said indicator comprises displaying a light source based on a hysteresis that reduces flickering effects of said light source and optionally wherein displaying said light source comprises producing a plurality of colors dependent on said power level.

12. A system comprising:
a phone having an indicator that provides feedback for audio input including a power level of said audio input.

13. The system of claim 12, wherein different colors indicate said power level of said audio input and/or wherein different patterns indicate said power level of said audio input.

14. The system of claim 12 or claim 13, wherein said audio input is filtered before providing said feedback and optionally wherein said audio input is filtered by removing echoes and background noise.

15. The system of any of claims 12 to 14, wherein said phone has a second indicator that signals incoming audio from a remote source.
